# EUROPÄISCHE PATENTANMELDUNG

(11) **EP 1 344 867 A2**
(43) Veröffentlichungstag der Anmeldung: **17.09.2003**
(21) Anmeldenummer: 03003334.4
(22) Anmeldetag: 13.02.2003
(51) Int. Cl.: E01F 9/06, F21S 8/02, F21V 15/01, F21V 5/02

(54) **Unterflurleuchte**

(30) Priorität: 15.02.2002 DE 20202407 U
(71) Anmelder: Garufo GmbH, 85368 Wang (DE)
(72) Erfinder: Garufo, Gabriel, 85368 Wang (DE)
(74) Vertreter: Pausch, Thomas, Dipl.-Phys.

(57) **Zusammenfassung**

Die Erfindung betrifft eine Unterflurleuchte (1) mit einem aus Oberteil (11) und Unterteil gebildeten Gehäuse zur Aufnahme einer lichtdurchlässigen Abdeckung (7) sowie einer im Oberteil (11) angeordneten Lichtquelle (6) und/oder einer lichtführenden Optik, wobei die lichtdurchlässige Abdeckung (7) ein im Oberteil (11) eingesetztes Prisma (7) aufweist, aus dem das Lichtbündel (2) in einer bestimmten Richtung, insbesondere in einem engen, spitzen Winkelbereich zur Horizontalen (H) austritt, und das Prisma (7) gegenüber dem eintretenden Licht eine hierzu senkrechte Eintrittsfläche (72) und gegenüber dem austretenden Licht eine schräggerichtete Austrittsfläche (71) aufweist, weiterhin ist in dem Oberteil (11) eine im wesentlichen horizontale, d.h. gegenüber der Horizontalen allenfalls geringfügig abwärtsgeneigte, und gegenüber der Oberseite (15) des Oberteiles (11) abgesetzte Freifläche (21) ausgebildet, die sich an den unteren Rand (73) der Austrittsfläche (71) des Prismas (7) anschließt und sich bis an den äußeren Rand (13) des Oberteils (11) erstreckt, und das Prisma (7) zwischen dem Rand (13) der Freifläche (21) und der Oberseite (15) dergestalt schräg eingesetzt ist, dass die Austrittsfläche (71) des Prismas (7) gegenüber der Horizontalen (H) einen Winkel von etwa 135° bildet.

## Beschreibung

Die Erfindung betrifft eine Unterflurleuchte nach dem Oberbegriff des Anspruches 1.

Eine derartige Unterflurleuchte ist beispielsweise aus der DE 198 09 253 A1 bekannt. Diese Unterflurleuchte hat ein aus Oberteil und Unterteil gebildetes Gehäuse zur Aufnahme einer lichtdurchlässigen Abdeckung sowie eine Lichtquelle und/oder eine lichtführende Optik. Das Oberteil besitzt einen lösbaren Einsatz, wobei die lichtdurchlässige Abdeckung im Einsatz angeordnet ist. Der Einsatz hat an seiner Oberseite im wesentlichen zwei gegeneinander geneigte Flächen, nämlich eine relativ zum Oberteil etwa mittige Horizontalfläche und eine hieran einseitig und außermittig anschließende, abwärts geneigte Schrägfläche, wobei die Schrägfläche eine Öffnung (Durchbruch) zur Aufnahme der lichtdurchlässigen Abdeckung besitzt. Die lichtdurchlässige Abdeckung stellt ein (einziges) Prisma dar, aus dem das Licht in einer bestimmten Richtung, insbesondere mit einem spitzen Winkel zur Horizontalen austritt. Das Prisma hat gegenüber dem eintretenden Licht eine hierzu senkrechte Eintrittsfläche und gegenüber dem austretenden Licht eine schräg gerichtete Austrittsfläche, wobei die Eintrittsfläche gegenüber einer Vertikalen um einen spitzen Winkel geneigt ist. Die Austrittsfläche des Prismas liegt annähernd in der Horizontalen und ist im wesentlichen bündig bzw. planparallel gegenüber der außermittig anschließenden, abwärts geneigten Schrägfläche, die ihrerseits fast parallel zur Horizontalen verläuft, jedenfalls gegenüber der Horizontalen nur geringfügig geneigt angeordnet ist.

Die aus der DE 198 09 253 A1 bekannt gewordene Unterflurleuchte besitzt folgende Nachteile. Aufgrund der Anordnung von Prisma bzw. dessen Austrittsfläche und der sich daran anschließenden Horizontal- und Schrägflächen an der Oberseite des Einsatzes ist das aus zerbrechlichem Material insbesondere Hartglas bestehende Prisma praktisch ungeschützt den über die Unterflurleuchte rollenden Fahrzeugen ausgesetzt. Aufgrund der heute üblichen hohen Achslasten von Straßenverkehrsfahrzeugen ist das Prisma der vorbekannten Bauart nicht hinreichend stabil und mechanisch belastbar. Die lichtdurchlässige Abdeckung kann an ihrer Oberfläche mehr oder weniger stark abnutzen, und schließlich an Transparenz verlieren. Denn durch den darüber rollenden Verkehr entsteht Reifenabrieb, der im Bereich der Austrittsfläche der lichtdurchlässigen Abdeckung liegen bleiben kann und die optischen Abstrahleigenschaften in ungünstiger Weise beeinflusst, und im ungünstigsten Fall zur unerwünschten Blendung der Verkehrsteilnehmer dann führen kann, wenn der nach oben bzw. schräg von der Horizontalen gerichtete Anteil des abgestrahlten Lichtbündels aufgrund von Reflektion und Beugung an den Abriebteilchen zunimmt. Aufgrund der Anordnung der lichtdurchlässigen Abdeckung ist die in horizontaler Richtung abgestrahlte Lichtleistung ohnehin geringer und daher bereits ungünstig. Darüber hinaus können sich auf der Austrittsfläche der lichtdurchlässigen Abdeckung aufgrund der ungünstigeren Geometrie der vorbekannten Unterflurleuchte Schmutz, Steinchen und dergleichen Fremdkörper, und vor allem auch Regen- und Spritzwasser sammeln, und zum einen eine mechanische Gefährdung der lichtdurchlässigen Abdeckung, und zumindest eine Verschlechterung der optischen Eigenschaften der lichtdurchlässigen Abdeckung ebenfalls nach sich ziehen.

Aufgrund der Nachteile der bisher bekannten Unterflursignalanordnungen haben sich diese im Straßenverkehrsbereich noch nicht wesentlich durchsetzen können. Einerseits ist in allen Bereichen eine erhebliche Verkehrszunahmen zu verzeichnen; andererseits zeigt sich, dass die bisherigen Verkehrssteuerungssignale noch immer nicht ausreichend sind. Insbesondere besteht ein Bedarf an signalgebenden Elementen im Fahrbahnbereich, die im Rahmen einer Unterflurinstallation flexibel einsetzbar sind. Bislang sind im Straßenverkehrsbereich entsprechende Unterflursignalanordnungen in kaum nennenswerten Umfang zu finden, sondern allenfalls in Spezialbereichen, wie beispielsweise Flughäfen und dergleichen. Leuchteinrichtungen für Flughäfen, insbesondere Unterflurfeuer zur Signalabgabe, Kennzeichnung oder Markierung sind beispielsweise aus DE 297 12 281 U1, DE 297 23 372 U1 bekannt. Es handelt sich um komplex aufgebaute Elemente mit einem im Unterflur einsetzbaren Gehäuse, in welches LED-Gruppen montiert werden, die durch segmentierte Glasabdeckungen abgedeckt werden, um so die gewünschten Farben, Signale und Signalrichtungen herstellen zu können. Die auf den Abdeckungen gebildeten Erhebungen, Segmentierungsrippen und dergleichen machen die Vorrichtung für den Einsatz in vielbefahrenen Verkehrsflächen, insbesondere im Straßenbereich, ungeeignet, da sie dort eine Gefährdung beispielsweise für Motorräder und Fahrräder darstellen.

Aufgabe der Erfindung ist es, die gattungsgemäße Unterflurleuchte für den Einsatz im allgemeinen Straßenverkehr dahingehend zu verbessern, dass bei möglichst geringer Bauhöhe der Unterflurleuchte eine wesentlich höhere Lichtleistung des im wesentlichen in horizontaler Richtung abgestrahlten Lichtbündels möglich ist, und dabei eine Gefahr von Verschmutzung oder Gefährdung der optischen Eigenschaften vermieden und Wartungsfreundlichkeit und damit höhere Lebensdauer der Unterflurleuchte gewährleistet ist.

Diese Aufgabe wird durch eine Unterflurleuchte nach Anspruch 1 gelöst.

Die erfindungsgemäße Unterflurleuchte zeichnet sich dadurch aus, dass in dem Oberteil eine im wesentlichen horizontale, d.h. gegenüber der Horizontalen allenfalls geringfügig abwärtsgeneigte, und gegenüber der Oberseite des Oberteiles abgesetzte Freifläche ausgebildet ist, die sich an den unteren Rand der Austrittsfläche des Prismas anschließt und sich bis an den äußeren Rand des Oberteils erstreckt, und das Prisma zwischen dem Rand der Freifläche und der Oberseite dergestalt schräg eingesetzt ist, dass die Austrittsfläche des Prismas gegenüber der Horizontalen einen Winkel von etwa 135° bildet.

Die Erfindung bietet eine im allgemeinen Straßenverkehrsbereich anzuwendende, und im Hinblick auf wirtschaftliche Fertigung brauchbare und alle Erfordernisse erfüllende Unterflurleuchte. Die erfindungsgemäße Unterflurleuchte hat eine äußerst geringe Bauhöhe und eignet sich für den Einsatz in vielbefahrenen Verkehrsflächen, insbesondere im Straßenbereich. Aufgrund der Anordnung des Prismas und der Austrittsfläche des Prismas kann eine sehr hohe Lichtleistung in im wesentlichen horizontaler Richtung abgegeben werden. Durch die Anordnung des Prismas bzw. der Lichtaustrittsfläche des Prismas wird eine optimale Lichtauskopplung gewährleistet. Dadurch, dass die Lichteintrittsfläche im wesentlichen senkrecht zur Abstrahlrichtung der Lichtquelle orientiert ist, wird darüber hinaus auch eine optimale Lichteinkopplung in das Prisma von der Lichtquelle gewährleistet. Darüber hinaus werden durch die erfindungsgemäße Geometrie und Anordnung der im Oberteil der Unterflurleuchte ausgebildeten Freifläche und Ausbildung und Anordnung des im Oberteil eingesetzten Prismas die Nachteile bisher bekannt gewordener Unterflurleuchten beseitigt. Die erfindungsgemäße Anordnung von Prisma bzw. dessen Austrittsfläche und der sich daran anschließenden Freifläche bietet zunächst bereits einen erheblich verbesserten mechanischen Schutz gegenüber den über die Unterflurleuchte rollenden Fahrzeugen. Durch die Anordnung der Austrittsfläche des Prismas, welche gegenüber der Horizontalen einen Winkel von etwa 135° bildet, besteht eine weit geringere Gefahr, dass sich Abrieb, Schmutz, Steinchen und dergleichen Fremdkörper auf der besonders empfindlichen lichtdurchlässigen Abdeckung sammeln, so dass eine mechanisch Gefährdung der lichtdurchlässigen Abdeckung, oder auch damit einhergehend eine Verschlechterung der optischen Eigenschaften der lichtdurchlässigen Abdeckung weit weniger zu befürchten ist. Durch die Schrägstellung der Austrittsfläche des Prismas und einen konturlosen Übergang zu der sich an den unteren Rand der Austrittsfläche des Prismas anschließenden Freifläche bleiben Schmutzpartikel usw. an diesen Stellen nicht liegen, so dass man von einem Selbstreinigungseffekt sprechen kann. Durch diese Anordnung von Prisma und Freifläche im Oberteil des Gehäuses der Unterflurleuchte, und der Möglichkeit, die Lichtquelle in unmittelbarer Nähe der Eintrittsfläche des Prismas anzuordnen, öffnet sich auch die Möglichkeit, das Oberteil der Unterflurleuchte in seht kompakter Form und vor allem mit sehr geringer Bauhöhe zu fertigen. Das gesamte Oberteil mit darin integrierter lichtdurchlässigen Abdeckung mit Prisma und Lichtquelle bildet eine bauliche Einheit, die in einfacher Weise vorgefertigt und ebenso einfach am Einsatzort montiert werden kann. Eine solche bauliche Einheit ist im übrigen besser gegen eine Korrosionsgefahr geschützt und mechanisch insgesamt stabiler. Außerdem besteht weit weniger eine Gefahr einer Dejustage der optischen Komponenten und Lichtquellen während des Betriebes der Unterflurleuchte. Die erfindungsgemäße Unterflurleuchte bietet schließlich eine bessere Wartungsfreundlichkeit und höhere Lebensdauer.

Bei einer vorteilhaften und konstruktiv bevorzugten Weiterbildung der Erfindung ist das Prisma in einem im Oberteil des Gehäuses ausgebildeten Durchbruch eingesetzt. Hierbei kann in weiterer vorteilhafter Weiterbildung der Erfindung die Lichtquelle und/oder die lichtführende Optik ebenfalls in dem Durchbruch im Oberteil des Gehäuses untergebracht sein.

Eine weitere Erhöhung der mechanischen Stabilität der erfindungsgemäßen Unterflurleuchte kann bei einer weiteren bevorzugten Ausbildung dann erreicht werden, wenn die Freifläche von zumindest einem Steg unterbrochen ist, wobei sich der Steg von der Oberseite des Gehäuseoberteils in sektionaler Richtung schräg abwärts geneigt zum äußeren Rand des Gehäuseoberteiles erstreckt. Hierbei unterteilt der wenigstens eine Steg die Freifläche zur Ausbildung von Teil-Lichtkanälen. Nach dieser vorteilhaften Weiterbildung der Erfindung sind wenigstens zwei Systeme bestehend aus elektrischer Lichtquelle und dieser zugeordnetem vom emittierten Licht zu durchstrahlenden Fenster mit Lichteintritts- und Lichtaustrittsfläche vorgesehen. Hierdurch wird erreicht, dass selbst bei totaler Zerstörung eines vollen Systems aus Lichtquelle und Fenster die Funktionalität voll erhalten bleibt und so die wartungsfreie Einsatzzeit um ein vielfaches verlängert ist.

Eine bevorzugte Ausgestaltung der Erfindung sieht vor, dass die Systeme räumlich nebeneinander angeordnet sind. Hierdurch wird bei Ausfall eines Systems eine ausreichende Funktion der Unterflurleuchte in vorgesehener Abstrahlrichtung der Lichtinformation gewährleistet.

Dem folgend erfolgt in einer vorteilhaften Ausgestaltung der Erfindung die Lichtemission von den Systemen im wesentlichen in die gleiche Richtung in den Lichtkanal.

Die Stege unterteilen den Lichtkanal von Vorteil in mehrere Teil-Lichtkanäle, wodurch diese einzeln die volle Funktionalität sicherstellen, selbst bei Blockade eines Teil-Lichtkanals beispielsweise durch Verschmutzung oder Beschädigung.

Bevorzugter Weise hat der Gehäusekörper eine im wesentlichen geschlossene Form, mit insbesondere geschlossener Oberfläche bis auf die Öffnungen durch die das emittierte Licht austritt, wobei in die geschlossene Form hinein die Teil-Lichtkanäle bzw. der Lichtkanal in Form von Ausnehmungen ausgebildet sind, sodass der neben den Kanälen stehen bleibende Bereich der geschlossenen Form die Stege bildet.

Besonders von Vorteil und daher bevorzugter Weise ist die Freifläche der Teil-Lichtkanäle bzw. des Lichtkanals durch eine zum äußeren Rand des Gehäusekörpers hin abfallende Schräge ausgebildet. Hierdurch wird wiederum wie bei der angeschrägten Lichtaustrittsfläche durch die abschüssige Ausgestaltung nach außen hin ein Ablaufen Wasser zusammen mit Schmutzpartikeln ermöglicht, wodurch ein selbstreinigender Effekt entsteht und dadurch die Einsatzdauer der Unterflurleuchten ganz erheblich gesteigert ist. Durch die in das Gehäuse eingeformten Lichtkanäle wird beim Überfahren derselben mit einem Fahrzeug zusätzlich eine Beschleunigung des Wassers bewirkt, was den Reinigungsvorgang noch stark unterstützt.

Vorteilhafterweise ist der Gehäusekörper einstückig ausgebildet, was eine besonders einfache und billige Herstellung desselben ermöglicht.

Bei der weiterhin vorteilhaften Ausgestaltung der Erfindung kann vorgesehen sein, dass das Gehäuseoberteil an seiner Oberseite außerhalb der Freifläche noch im wesentlichen zwei gegeneinander geneigte Flächen aufweist, nämlich eine relativ zum Oberteil etwa mittige Horizontalfläche und eine hieran außermittig anschließende, radial nach außen abwärtsgeneigte Schrägfläche, wobei die Freifläche sowohl einen Teil der Horizontalfläche als auch einen Teil der Schrägfläche herausschneidet. Dabei ist von Vorteil die Freifläche im wesentlichen glatt ausgebildet, während die Horizontal- und/oder Schrägfläche strukturiert ausgebildet ist. Durch diese Strukturierung der Oberflächen wird, insbesondere bei leicht in die Oberfläche der Fahrbahn eingelassener Montage der Unterflurleuchte, einerseits ein besonders abriebarmes Überfahren ermöglicht. Dies verringert wiederum stark die Schmutzentwicklung und mechanische Belastung und erhöht dadurch die Lebensdauer entsprechend. Auf der anderen Seite ermöglicht die glatte Oberfläche der Freifläche einen Wegtransport von Schmutzablagerungen und dergleichen durch Windeinwirkung und verbessert somit den Selbstreinigungseffekt.

Weitere Vorteile, Besonderheiten und zweckmäßige Weiterbildungen der Erfindung ergeben sich aus den weiteren Unteransprüchen oder deren Unterkombinationen.

Nachfolgend wird die Erfindung anhand der Zeichnung weiter erläutert. Im Einzelnen zeigt die schematische Darstellung in:
- Figur 1: eine Aufsicht mit zwei Detailausschnitten auf eine erfindungsgemäßen Unterflurleuchte mit vier Teillichtkanälen,
- Figur 1a und 1b: Detailbilder aus Figur 1,
- Figur 2: eine Aufsicht auf die Unterflurleuchte aus Figur 1, wobei die Schnitte gemäß Figur 3a bis 3c gekennzeichnet sind,
- Figur 2a: Schnitt in Richtung AB durch die Unterflurleuchte aus Figur 3, wobei der Schnitt durch den Steg verläuft,
- Figur 2b: Schnitt in Richtung EF aus Figur 3, wobei der Schnitt durch den Lichtkanal erfolgt, wobei das Fenster nicht eingesetzt ist,
- Figur 2c: Schnitt in Richtung CD durch den Unterflurleuchte aus Figur 3, wobei der Schnitt unter anderem durch die Verschraubungsausnehmung 4 verläuft,
- Figur 3: eine Detailschnittdarstellung durch den Borsteinreflektor mit darin befindlichen Lichtquellefenster und Lichtkanal, wobei das Detail K herausgestellt vergrößert ist, und
- Figur 4: eine Anordnung der nebeneinanderliegenden Systeme, welche jeweils aus drei Lichtquellen und zugehörigem Fenster bestehen.

Die in den Figuren gleichen Bezugsziffern bezeichnen gleiche oder gleich wirkende Elemente.

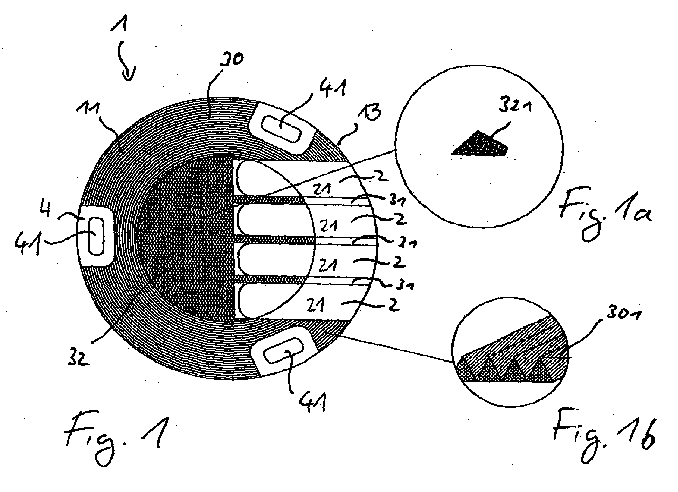

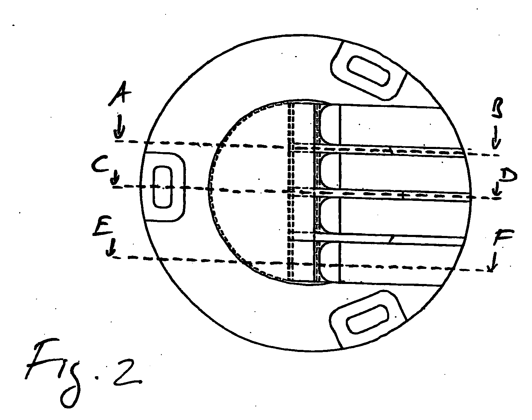

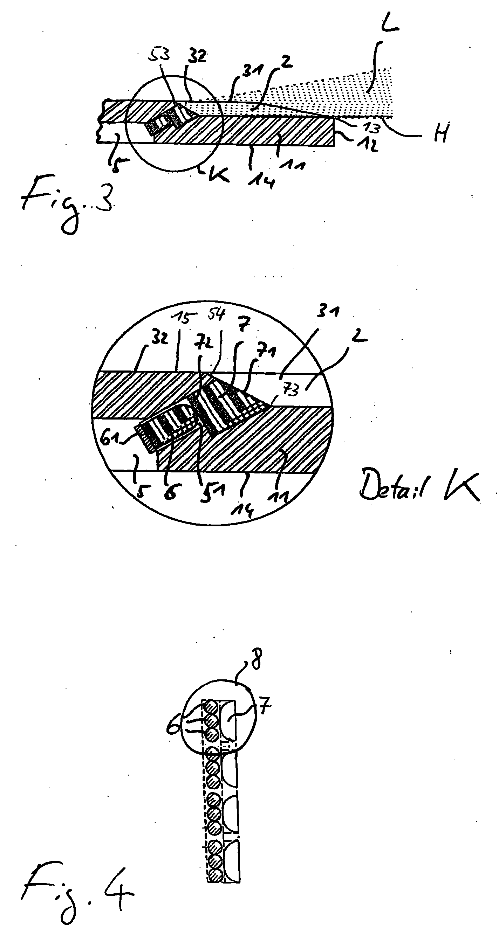

Das in den Figuren 1 bis 4 dargestellte bevorzugte Ausführungsbeispiel der Erfindung umfasst eine Unterflurleuchte 1 mit einem aus Oberteil 11 und (in den Figuren nicht näher dargestellten) Unterteil gebildeten Gehäuse zur Aufnahme einer lichtdurchlässigen Abdeckung 7 sowie einer im Oberteil 11 angeordneten Lichtquelle 6, wobei die lichtdurchlässige Abdeckung ein im Oberteil 11 eingesetztes Prisma 7 aufweist, aus dem das Lichtbündel L in einer bestimmten Richtung, insbesondere in einem engen, spitzen Winkelbereich zur Horizontalen H austritt, und das Prisma 7 gegenüber dem eintretenden Licht von der Lichtquelle 6 eine hierzu senkrechte Eintrittsfläche 72 und gegenüber dem austretenden Licht L eine schräg gerichtete Austrittsfläche 72 aufweist. Nach dem erfindungsgemäßen Ausführungsbeispiel ist in dem Oberteil 11 eine im wesentlichen horizontalen d. h. gegenüber der Horizontalen H allenfalls geringfügig abwärts geneigte, und gegenüber der Oberseite 15 des Oberteiles 11 abgesetzte Freifläche 21 ausgebildet ist, die sich an den unteren Rand 73 der Austrittsfläche 71 des Prismas 7 anschließt und sich bis an den äußeren Rand 13 des Oberteils 11 erstreckt, und das Prisma 7 zwischen dem Rand 73 der Freifläche und der Oberseite 15 dergestalt schräg eingesetzt ist, dass die Austrittsfläche 71 des Prismas 7 gegenüber der Horizontalen H einen Winkel von etwa 135° bildet. In dem vorzugsweise aus Hartmetall oder auch aus bruchfestem Kunststoff gefertigten Oberteil 11 des Gehäuses ist wenigstens ein etwa unter einem schrägen Winkel von 45° gegenüber der Horizontalen H gebildeter Durchbruch 52 vorgesehen, dessen lichte Weite zur Aufnahme des Prismas 7 in einem oberen Bereich vergrößert ist, während der untere Bereich 51 des Durchbruches 52 eine geringere lichte Weite zur Aufnahme der Lichtquelle 6 hat. Prisma 7 und Lichtquelle 6 sind in dem Durchbruch 52 eingesetzt bzw. festgelegt, und sind somit vollständig im Oberteil 11 des Gehäuses untergebracht. Der äußere Rand 53 des den Durchbruch 52 an der Oberseite des Oberteils 11 abschließenden Bereiches hat eine Randfläche 54, welche im wesentlichen planparallel und bündig mit der Austrittsfläche 71 des Prismas 7 abschließt (Detail K von Fig. 3).

Die Freifläche 21 ist von zumindest einem Steg 31 unterbrochen, welcher Steg 31 sich von der Oberseite 15 des Gehäuseoberteils 11 in sektionaler Richtung schräg abwärts geneigt bis zum äußeren Rand 13 des Gehäuseoberteils 11 erstreckt. Im dargestellten Ausführungsbeispiel sind drei solcher Stege 31 vorgesehen, wobei die Anzahl der Stege 31 auch größer sein kann. Die Stege 31 bewirken eine Unterteilung der Freifläche 21 zur Ausbildung von Teil-Lichtkanälen 2, wobei im dargestellten Ausführungsbeispiel vier solcher Teil-Lichtkanäle vorgesehen sind.

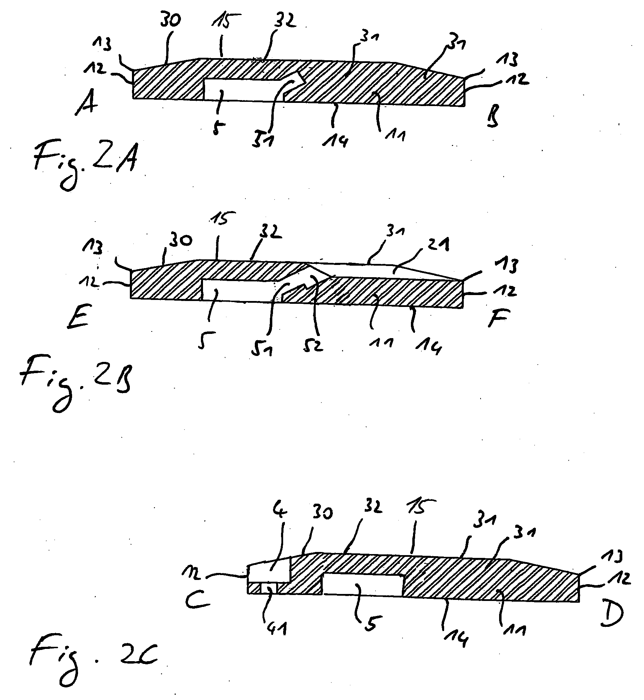

Insbesondere nach der Darstellung gemäß Fig. 1 und 2 ist ersichtlich, dass das Gehäuseoberteil 11 an seiner Oberseite 15 außerhalb der Freifläche 21 noch im wesentlichen zwei gegeneinander geneigte Flächen aufweist, nämlich eine relativ zum Oberteil 11 etwa mittige Horizontalfläche 32 und eine hieran außermittig anschließende, radial nach außen abwärts geneigte Schrägfläche 30, wobei die Freifläche 21 sowohl einen Teil der Horizontalfläche 32 als auch einen Teil der Schrägfläche 30 herausschneidet. Die Freifläche 21 ist im wesentlichen glatt ausgebildet, während die Horizontalfläche 32 und/oder die Schrägfläche 30 strukturiert ausgebildet ist. Beim dargestellten Ausführungsbeispiel ist die Oberfläche der Schrägfläche 30 in Form von senkrecht zur radialen Richtung ausgerichteten konzentrischen Rillen 301 strukturiert, welche Rillen in radialer Richtung einen dreiecksförmigen Querschnitt aufweisen, wie es schematisch in Fig. 1b dargestellt ist. Die Oberfläche der Horizontalfläche 32 ist in Form geometrischer Grundkörper strukturiert, wobei im gezeigten Ausführungsbeispiel als geometrische Grundkörper vierseitige, nicht rechtwinklige Pyramiden 321 Anwendung finden, wie es schematisch in Fig. 1a dargestellt ist. Durch diese Strukturierung der Oberflächen von Horizontalfläche 32 und Schrägfläche 30 wird einerseits eine bessere Traktion der Reifen der überfahrenden Fahrzeuge erreicht und andererseits der Abrieb der Fahrzeugreifen minimiert.

Figur 1 zeigt die erfindungsgemäße Unterflurleuchte 1 in Aufsicht auf die zu überfahrende Seite (untere Montageseite 14 verdeckt). Das Gehäuseoberteil 11 hat eine im Wesentlichen geschlossene Form, wobei die Teil-Lichtkanäle 2 in Form von Ausnehmungen in die geschlossene Form hinein ausgebildet sind, wobei die Stege 31 zwischen ihnen stehen bleiben. Die Stege 31 bilden somit teilweise die seitlichen Wandungen der Teil-Lichtkanäle 2. Die Stege halten so die sonst auf die Systeme 8 (siehe Figur 3) wirkenden, beim Überfahren auftretenden mechanische Kräfte ab.

Die Unterflurleuchte 1 wird zur Montage auf einem Untergrund, beispielsweise direkt auf der Fahrbahn als Begrenzungsmarkierung, vorzugsweise leicht in die Oberfläche der Fahrbahn eingelassen montiert, so dass die Unterflurleuchte mit ihren Seitenflächen 12 im Boden eingelassen ist. Hierzu wird das Gehäuseoberteil 11 durch die Ausnehmungen 4 (siehe Figur 1) vermittels Schrauben - nicht dargestellt - durch die Durchführungs-Bohrung 41 auf dem Untergrund befestigt. Die Systeme 8 aus Lichtquelle und Fenster sind räumlich nebeneinander mit jeweils eigenem Teil-Lichtkanal 2 angeordnet. Die Lichtemission von den Systemen 8 erfolgt im wesentlichen in die gleiche Richtung in den in Teil-Lichtkanäle 2 unterteilten Lichtkanal, sodass ein Ausfall selbst mehrerer Systeme die Funktionalität nicht beeinträchtigt.

Die Figuren 2 und 2a bis 2c zeigen das Gehäuseoberteil 11 in mehreren Querschnittsdarstellungen. Figur 2 zeigt hierbei die Lage der Schnittdarstellungen aus den Figuren 2a bis 2c.

Figur 2a, welche den Querschnitt aus Figur 2 in Richtung A-C zeigt, veranschaulicht wie die Schrägfläche 30 zur Horizontalfläche 32 an der Oberseite angewinkelt ist. Die Schrägfläche geht bis zum äußeren Rand 13 des Gehäuseoberteils 11, an das sich auch die senkrechte Seitenfläche 12 anschließt. Dargestellt ist auch der die Lichtquelle und deren Energiezuführung aufnehmende Hohlraum 5 mit zugehöriger Lichtquellenaussparung 51. Eine Stromkabelzuführung ist so von der Unterseite 14 des Gehäusekörpers möglich.

Figur 2b zeigt einen Querschnitt in Richtung E-F aus Figur 2. Neben der Aussparung 51 für die Lichtquelle ist auch die Aussparung 52 für das Fenster 7 sichtbar. Unmittelbar an die Fenster-Aussparung schließt sich der Teil-Lichtkanal 2 an, durch den das aus dem Fenster 7 ausgekoppelte Licht L geleitet wird (Figur 3). Die Freifläche 21 des Teil-Lichtkanals 2 ist eine zum äußeren Rand 13 des Gehäusekörpers 11 hin abfallende Schräge (nur wenige Grad, daher nicht dargestellt).

Figur 2c zeigt einen Querschnitt in Richtung C-D aus Figur 2, wobei ein Querschnitt durch die Befestigungsausnehmungen 4 mit Schraubendurchlass 41 sichtbar wird.

Figur 3 zeigt eine Schnittdarstellung durch den Bereich der Lichtquelle 6 im Hohlraum 5 und 51 sowie das Fenster 7 in seiner Ausnehmung 52 und den Teil-Lichtkanal 2, durch den das emittierte Licht L geführt wird. Die montierte Lichtquelle ist in Form einer Leuchtdiode 6 ausgebildet. Das Fenster 7 ist als Prisma ausgestaltet, dessen Lichteintrittsfläche 72 nicht parallel zur Lichtaustrittsfläche 71 ist. Hierdurch wird eine das Licht L in die gewünschte Richtung gelenkt und zudem wird erreicht, dass durch die Anstellung der Lichtaustrittsfläche 71 zur Senkrechten die gewünschte Schmutzableitung erfolgt. Die Lichteintrittsfläche 72 ist im wesentlichen senkrecht zur Abstrahlrichtung der Lichtquelle 6 orientiert, was eine optimale Licht'einkopplung in das Fenster 7 ermöglicht. Siehe hierzu auch Detaildarstellung K.

Figur 4 zeigt schließlich die nebeneinander angeordneten Systeme 8 von Lichtquelle (jeweils drei Leuchtdioden 6) und Fenster 7.

### Bezugszeichenliste

- 1: Unterflurleuchte
- 11: Oberteil
- 12: Seitenfläche
- 13: äußerer Rand
- 14: Unterseite (Montageseite)
- 15: Oberseite
- 2: Teil-Lichtkanal
- 21: Freifläche
- 30: Schrägfläche
- 301: Rille
- 31: Steg
- 32: Horizontalfläche
- 321: Pyramiden
- 4: Ausnehmung
- 41: Durchführungs-Bohrung
- 5: Hohlraum
- 51: Lichtquellenaussparung
- 52: Durchbruch
- 53: äußerer Rand
- 54: Randfläche
- 6: Leuchtdiode, Lichtquelle
- 61: Platine
- L: emittiertes Licht
- 7: Prisma
- 71: Lichtaustrittsfläche
- 72: Lichteintrittsfläche
- 73: unterer Rand
- 8: System (Lichtquelle und Fenster)

- H: Horizontale

## Patentansprüche

1. Unterflurleuchte (1) mit einem aus Oberteil (11) und Unterteil gebildeten Gehäuse zur Aufnahme einer lichtdurchlässigen Abdeckung (7) sowie einer im Oberteil (11) angeordneten Lichtquelle (6) und/oder einer lichtführenden Optik, wobei die lichtdurchlässige Abdeckung (7) ein im Oberteil (11) eingesetztes Prisma (7) aufweist, aus dem das Lichtbündel (2) in einer bestimmten Richtung, insbesondere in einem engen, spitzen Winkelbereich zur Horizontalen (H) austritt, und das Prisma (7) gegenüber dem eintretenden Licht eine hierzu senkrechte Eintrittsfläche (72) und gegenüber dem austretenden Licht eine schräggerichtete Austrittsfläche (71) aufweist,
**dadurch gekennzeichnet,**
**dass** in dem Oberteil (11) eine im wesentlichen horizontale, d.h. gegenüber der Horizontalen allenfalls geringfügig abwärtsgeneigte, und gegenüber der Oberseite (15) des Oberteiles (11) abgesetzte Freifläche (21) ausgebildet ist, die sich an den unteren Rand (73) der Austrittsfläche (71) des Prismas (7) anschließt und sich bis an den äußeren Rand (13) des Oberteils (11) erstreckt, und das Prisma (7) zwischen dem Rand (13) der Freifläche (21) und der Oberseite (15) dergestalt schräg eingesetzt ist, dass die Austrittsfläche (71) des Prismas (7) gegenüber der Horizontalen (H) einen Winkel von etwa 135° bildet.

2. Unterflurleuchte nach Anspruch 1,
**dadurch gekennzeichnet,**
**dass** das Prisma (7) in einem im Oberteil (11) des Gehäuses ausgebildeten Durchbruch (52) eingesetzt ist.

3. Unterflurleuchte nach Anspruch 1 oder 2,
**dadurch gekennzeichnet,**
**dass** die Lichtquelle (6) und/oder die lichtführende Optik ebenfalls in dem Durchbruch (52) im Oberteil (11) des Gehäuses untergebracht ist.

4. Unterflurleuchte nach einem der Ansprüche 1 bis 3,
**dadurch gekennzeichnet,**
**dass** die Freifläche (21) von zumindest einem Steg (31) unterbrochen ist, welcher Steg (31) sich von der Oberseite (15) des Gehäuseoberteiles (11) in sektionaler Richtung schräg abwärtsgeneigt bis zum äußeren Rand (13) des Gehäuseoberteiles (11) erstreckt.

5. Unterflurleuchte nach Anspruch 4,
**dadurch gekennzeichnet,**
**dass** der wenigstens eine Steg (31) die Freifläche zur Ausbildung von Teil-Lichtkanälen (2) unterteilt.

6. Unterflurleuchte nach einem der Ansprüche 1 bis 5,
**dadurch gekennzeichnet,**
**dass** das Gehäuseoberteil (11) an seiner Oberseite (15) außerhalb der Freifläche (21) noch im wesentlichen zwei gegeneinander geneigte Flächen aufweist, nämlich eine relativ zum Oberteil (11) etwa mittige Horizontalfläche (32) und eine hieran außermittig anschließende, radial nach außen abwärtsgeneigte Schrägfläche (30), wobei die Freifläche (21) sowohl einen Teil der Horizontalfläche (32) als auch einen Teil der Schrägfläche (31) herausschneidet.

7. Unterflurleuchte nach Anspruch 6,
**dadurch gekennzeichnet,**
**dass** die Freifläche (21) im wesentlichen glatt ausgebildet ist, während die Horizontal- und/oder Schrägfläche (30, 32) strukturiert ist.

8. Unterflurleuchte nach einem der Ansprüche 1 bis 7,
**dadurch gekennzeichnet,**
**dass** das Gehäuseoberteil (11) einstückig ausgebildet ist.

9. Unterflurleuchte nach einem der Ansprüche 1 bis 8,
**dadurch gekennzeichnet,**
**dass** mehrere, nämlich wenigstens zwei Prismen (7) räumlich nebeneinander angeordnet sind, wobei die Lichtausstrahlung von den Prismen (7) im wesentlichen in die gleiche Richtung in den von der Freifläche (21) definierten Lichtkanal (2) erfolgt.
